# EUROPEAN PATENT SPECIFICATION

(11) **EP 1 556 547 B1**
(45) Date of publication and mention of the grant of the patent: **12.05.2010**
(21) Application number: 03755567.9
(22) Date of filing: 06.10.2003
(51) Int. Cl.: D21H 21/02, C02F 1/50

(54) **ADDITIVE AND METHOD FOR AVOIDING OR AT LEAST REDUCING DEPOSITS IN WATER BEARING AND/OR CONTACTING INDUSTRIAL SYSTEMS**
ADDITIV UND VERFAHREN ZUR VERMEIDUNG ODER ZUMINDEST ZUR VERRINGERUNG VON ABLAGERUNGEN IN WASSERFÜHRENDEN INDUSTRIELLEN SYSTEMEN
ADDITIF ET PROCEDE PERMETTANT D'EVITER OU D'AU MOINS REDUIRE LES DEPOTS DANS LES SYSTEMES INDUSTRIELS TRANSPORTANT DE L'EAU ET/OU SE TROUVANT EN CONTACT AVEC DE L'EAU

(30) Priority: 07.10.2002 WO PCT/EP02/11216; 12.11.2002 WO PCT/EP02/12662
(43) Date of publication of application: 27.07.2005
(73) Proprietor: Pohlen, Alfred, 8315 Olm (LU); Kern, Gerhard, 7201 Neudörfl (AT)
(72) Inventor: POHLEN, Alfred, L-8315 Olm (LU); KERN, Gerhard, A-7201 Neudörfl (AT); SPEDDING, Jeffrey, A-5026 Salzburg (AT)
(74) Representative: Schwarzensteiner, Marie-Luise
(86) International application number: PCT/EP2003/011029
(87) International publication number: WO 2004/031481

(56) References cited:
- CA-A- 2 291 882
- US-A- 3 151 020
- US-A1- 2002 003 114
- US-A1- 2002 110 603
- US-B1- 6 423 267
- PATENT ABSTRACTS OF JAPAN vol. 2000, no. 18, 5 June 2001 (2001-06-05) & JP 08 176996 A (HAKUTO CO LTD;GREAT LAKES CHEM CORP), 9 July 1996 (1996-07-09)

## Description

The present invention concerns an additive and a method for avoiding or at least reducing deposits in water bearing and/or contacting industrial systems.

Within the present invention the term "water bearing and/or contacting industrial systems" means any plant, machine or equipment bearing water or coming into contact with water during its run, for instance but not limited to heat exchangers, cooling towers, boilers, waste-water treatment plants or last but not least paper machines.

Deposits forming within such systems are well known to cause various problems. So scale forming on the surfaces of a heat-exchanger will reduce the efficiency of heat-transfer. In a cooling tower system deposits can lead to mechanical breakdown of the cooling surfaces.

During paper making a wet paper sheet is formed in a continuous process, dried by pressing and subsequent heating. These three steps take place in the so-called wire section, press section and drying section, respectively. In paper machines deposits may origin from fibres, or other solid material used in paper making processes and due to the temperature and nutrition conditions within a paper making plant from micro-organism growth. These micro-organisms do not only multiply in the circuit water but also can form slime on surfaces.
Further, many of the additives used in papermaking such as retention aids, charged polymers used for fixing anionic trash, sizing agents and wet-strength resins can contribute to the deposit problems. Even natural resins from pulp, either chemical pulp or from mechanical pulp, are a known problem in this respect. Further, if coated paper is broked and re-cycled back into the stock, it brings the synthetic binders used in the coating with it contributing to the problem known as "white pitch".

Further, recycling of waste paper is the cause of some of the most troublesome deposit problems in papermaking today. Not only often contaminated with micro-organisms but due to adhesives used for labels, packaging construction etc., waste paper and board is a well known source of deposit causing substances known as stickies.

The water circuit in a paper machine where the dispersed papermaking fibres and other solids are initially separated from the slurry in a forming device to make the paper sheet, usually a continuously moving sieve, is normally called the white-water I circuit. The water in this circuit is recycled and continuously enriched with more papermaking solids. A second circuit where further water is pressed or drawn from the wet paper sheet and treated, for instance, to retrieve lost fibre or to clarify the water for further use is usually called white-water II. Deposits forming in these two circuits can create serious problems for the papermaking process and often lead to a break of the paper sheet requiring down-times of the machine. In patent EP 0 517 360 the addition of a hydrocarbon solvent together with at least one tenside to the pulper of a papermaking system using secondary fibre containing hot melt or pressure-sensitive adhesive contaminants is disclosed. It can reduce the amount of sticky material being liberated from the furnish into the aqueous pulp slurry. This process functions whereby during the pulping processes, where the adhesive tape etc. is separated from the fibres through thermal or mechanical energy, the addition of the solvent and tenside allows better separation of the adhesive contaminants from the fibres whereby the majority of the adhesive substance remains attached to the original substrate, namely the adhesive tape, which would then be removed by mechanical screening. The fibre would pass on in the system with lower levels of contamination.

In patent EP 0 731 776 it is disclosed that an oil-in-water emulsion containing organic solvents and tensides can be added to an aqueous system that transports solids, for instance in a papermaking process, to prevent slime formation and reduce microbiological growth. It is shown that levels of micro-organisms in the water phase can be significantly reduced thus reducing deposits that may be caused by such micro-organisms.

Also, lignosulphonates, as in EP 0 496 905, have been used for deposit control whereby it is set that the growth of microbes can be influenced so that the growth-rate of sessile or slime-forming micro-organisms is reduced and at the same time thus allowing the presence of non-sessile microorganisms to predominate consequently reducing the tendency towards slime deposits but possibly increasing the level of non-sessile (free-swimming) micro-organisms, which anyway should not disturb the process of papermaking. In the process of EP 0 496 905 a reduction in the number of non-sessile microbes is not sought.

US-PS 3, 151, 020 describes a method for inhibiting and controlling microorganisms in industrial process water systems. An additive is suggested containing an aliphatic hydrocarbon solvent and an emulsifier.

Due to ecological concerns, there is progressively increasing pressure to reduce or eliminate the use of potentially harmful or toxic substances used for deposit control in papermaking. Most of the processes used for deposit control already referred to above reflect this trend.

One main and common drawback of the known processes is that each of them addresses only one deposit form, i.e. micro-organism growth and along therewith slime forming, white pitch or stickies. In other words, a biocide can kill or control bugs and control deposits of biological slime. A pitch dispersant can control pitch deposits but would have no effect on biological slime. A bio-dispersant would disperse biological slime (not by killing bugs) but would not protect the surfaces against resins or pitch deposition.

Furthermore, water of solids derived from these circuits can lead to deposits forming in or on plant used in additional process steps. This is particularly so of paper machine drying sections where wet paper containing about 50% by weight of water derived from the paper making formation plant is fed into a system of heated cylinders to dry the paper. Sieves, felts and fabrics in plant intended for removal of water from aqueous suspensions or pastes, not only in paper machines but also for example in waste-water treatment plants become plugged from mechanical and/or biological sludge or slime and reduce the de-watering efficiency of the plant or may lead to problematic adhesion of the separated solids to the fabrics.

To combat these problems, it is usual to have various treatment systems in place. There can be oscillating high-pressure water jets, often situated before the vacuum channels ("vacuum boxes") which penetrate into the felts and drive out or loosen deposits. These can be discontinuous sprays or running constantly. The machine can be periodically stopped and the felts cleaned with special cleaning products usually consisting of tensides with alkali or acids. Sometimes solvents are used in addition.

After a certain time in operation, the felts may be no longer suitable and will have be replaced. This may be simply due to mechanical aging but replacement is often prematurely carried out due to contamination. The loss of production caused by stopping to clean the felts incurs big losses as explained already.

In plants designed to separate solids from waste-water such as sludge-presses, the aim is usually to achieve as high a solids content of the pressed sludge as possible and to produce as clean a filtrate water as possible. Often, the sludge will stick to the press de-watering fabrics (wires) on one hand whereby water jets will be used to clean the wires as they continually move around. This cleaning water will often go back into the sludge coming into the machine or even into the filtrate water re-contaminating it to a degree.

In all these cases, a treatment that would prevent deposits sticking to or contaminating the de-watering fabrics or that would improve the result of the pressurised pressure cleaning sprays, that could be applied continuously or at least without needing to stop the plant would give substantial benefits in performance, both technically and commercially.

In patent DE 195 19 268 C1 it is disclosed that an oil-in-water emulsion containing organic solvents and tensides can be applied to machines and plant structures used to make pulp, paper and board to clean away or inhibit contamination consisting of synthetic adhesives and/or natural resins. In this patent it is described that the preparation of stable oil-in-water emulsions is well known inferring that it is a requirement that the emulsion be stable. Further, it is cited that the hydrophobic phase of the said emulsion represents in the main, the substance giving the active effect.

Those with knowledge of oil-in-water emulsions will realise that a stable emulsion will become evenly distributed throughout any aqueous system into which it is added. Further, in de-watering machinery, for instance the press-section of a paper machine, large quantities of water are separated from the solid-liquid suspension being de-watered and this aqueous phase will pass through the de-watering medium such as a felt. Thus the greatest proportion of substances from the oil-in-water emulsion dispersed in that aqueous system will pass through the de-watering medium but remain mostly in the aqueous phase still as an emulsion. Only a limited part of the emulsified substances will make contact with the de-watering plant surfaces or remain adhered to such surfaces so long that such surfaces are continually bathed in an aqueous medium.

A simple everyday comparison would be to pour milk or even more relevant, highly diluted milk, through a piece of cloth. Milk as an example of an oil (fat)-in-water emulsion would pass easily through a cloth leaving only very small traces of the oil or fat phase on the cloth. Any subsequent water rinsing would wash most of the milk completely away.

Again, as a further everyday comparison, a simple oil and water mixture, for instance an oil and water salad dressing where in the static state the oil would separate and float on the surface of the dressing, when poured through a cloth, would leave much of the oil adhered to the cloth.

With these everyday examples in mind, the method of the present invention was developed to achieve a way of depositing the maximum possible amount of active products onto the sieve, felt or fabric to be treated by using as little active product as possible.

Further, tensides that can maintain a hydrophobic solvent in a stable emulsified condition may also cause undesirable foaming effects. In papermaking for instance, quite large amounts of products known as de-foamers are added specifically to reduce foam and the associated problems.

In patent EP 0 517 360 it is shown that the addition of a hydrocarbon solvent together with at least one tenside to the pulper of a papermaking system using secondary fibre containing hot melt or pressure-sensitive adhesive contaminants can reduce the amount of sticky material being liberated from the furnish into the aqueous pulp slurry. This process functions whereby during the pulping processes, where the adhesive tape etc. is separated from the fibres through thermal and mechanical energy, the addition of the solvent and tenside allows better separation of the adhesive contaminants from the fibres. The fibre would pass on in the system with lower levels of contamination. The combination of solvent and tenside is thus reducing the bond between fibrous material and any adhesive contamination resulting in less contamination remaining on the fibres.

In view of the drawbacks known from the state of the art and considering both economical and ecological aspects it has been an object of the present invention to provide a common means to keep clean any surfaces of water bearing and/or contacting industrial systems from deposits, particularly but not limited to surfaces of a paper machine, i.e. these of white water circuits I and II as well as sieves, felts and fabrics of the drying section during run of the plant, hereby avoiding down-times of the machines, increasing production and lowering costs.

The present invention provides an additive for avoiding or at least reducing formation of deposits on surfaces in water-bearing and/or contacting industrial systems as defined in claim 1.

Preferred embodiments of the additive may be derived from the subclaims 2 to 7.

The organic solvent is a hydrogen treated petroleum destillate fraction. The hydrophobic organic solvent or hydrogen treated petroleum destillate (de-aromatised white spirit) is derived from an aliphatic hydrocarbon mixture, obtained by treating a petroleum fraction with hydrogen, consisting of hydrocarbons having carbon numbers predominantly in the range of 6-13 and boiling in the range of 65°C to 230°C whereby the boiling range average is approximately 198°C and having an aromatic hydrocarbon content of less than 0,1%. A high flash point white spirit having an aromatic content less than 0,1% and having an initial boiling point of 175°-200°C and a final boiling point of approximately 220°C (or alternatively put, a boiling range average of approximately 198°C) is preferred.

Up to 20 % of the combination of organic solvent and tenside are preferably derived and replaced by one or more terpene solvents. The term terpene solvent covers any solvents derived from the skins of citrus fruit, commonly known as citrus oil, solvents derived from eucalyptus oil or solvents derived from pine trees, commonly known as pine oils. The preferred product is a citrus oil having a high limonene content, preferably up to 95% limonene (4-isopropenyl-1-methylcyclohexan).

The tenside is selected from the group consisting of alkyl benzene sulphonate, alcohol amine salts, polyalkylene glycolalkyl ether, alkyl sulphonsuccinate sodium salt and/or aliphatic alcohol alkoxylate. The preferred tensides are isopropanolamine dodecylbenzenesulphonate, polyethyleneglycolmonodecylether, di(2-ethylhexyl)sulphosuccinicacidsodium salt, C₁₂-C₁₄ aliphatic alcohol ethoxylate.

In a further preferred embodiment of the invention the organic solvent and tenside are pre-mixed and the mixture contains essentially no water.

Optionally the additive for avoiding or at least reducing deposits in water bearing and/or contacting industrial systems contains a stabilized halogen and/or a bromine or bromine chloride stabilized in a solution of over-based metal salt of sulfamic acid in an amount of 5 to 80 wt%.

The stabilized halogen is preferably a solution of chlorine and/or bromine and/or a solution of a compound of chlorine and/or bromine in combination with an alkaline solution of an amine. Usually the combination of any active halogen product such as sodium hypochlorite, mixtures of sodium hypochlorite with bromides such as sodium bromide or ammonium bromide with hydantoin derivates, urea, cyanuric acid or sulphamic acid is suitable within the present invention.

Further, and if necessary an oxidising or non-oxidising biocide may be added.

The present invention further concerns a method for avoiding or at least reducing formation of deposits on surfaces in water bearing and/or contacting industrial systems as defined in claim 8.

Preferred embodiments of the methode may be derived from subclaims 9 to 14.

Representative for all such systems in the present patent application a paper machine application mainly is described. During paper making a paper sheet is formed in a continuous process, pressed and thermally dried. These three steps of paper making occur in the so-called wire section, press section and drying section of a paper machine. In all three sections disturbing organic and inorganic deposits may form and need to be avoided or are reduced to limit breaks in the machine run and/or the paper sheet.

Surprisingly, we can show that all parts of such a system can be kept clean from deposits by adding the one and single product of the present invention.

Thus according to the method of the present invention the additive is directly or indirectly applied to a white water circuit (white water circuits I and II) or onto the pick-up felts, press felts, suction rolls or guide rolls in the press section or onto the drying fabrics, guide rolls or drying cylinders of the drying section of a paper or board machine.
The additive may be applied as a shock dose or continually as a solution in an amount ranging from 10 to 10.000 ppm based on the dry weight of solids contained in the water volume of the system. The method of the present invention may also be used for application of the additive onto the de-watering wires or associated guide rolls of a sludge press.

Here it is expressis verbis stated that the term "additive" within the meaning of the present invention means both the separate (non-mixed but combined) or pre-mixed addition of the additive components.

According to the present invention the components of the additive, i.e. the organic solvent and the tenside, optionally containing halogen components do not form an emulsion but discrete small droplets that may adsorb to hydrophobic surfaces. Surprisingly a deposit control effect on many types of deposits can be achieved. Any of or combinations of various types of deposit control agents can be replaced, making treatment more simple, avoiding toxic substances. According to practical results better long-term results can be achieved compared with conventional combi-systems.

Surprisingly, by comparison of various essentially hydrophobic liquids with the aim to create a protective layer on the surfaces of the paper machine circuits and parts coming in contact with the process water, it was found that certain specially treated hydrocarbon distillate fractions gave a very efficient protection against deposition of many types of contaminants whilst at the same time preventing or reducing the tendency of micro-organisms to form growths on those surfaces. By addition of small quantities of tensides to this hydrocarbon, on addition of a mixture of the components to the white water circuit of a paper machine, the hydrocarbon liquid was dispersed into droplets of such a size that although it still preferentially coated any hydrophobic surfaces in the paper machine thus affording the required protection against deposit formation, there were no hydrocarbon droplets present large enough to cause so called oil-spots in the paper sheet. The invention has distinct advantages over many conventional systems in that it uses products that in use are essentially harmless, and that the effect is such that by preventing the contamination from adhering to the surfaces it is independent of the type of contamination whether chemical, from natural or synthetic adhesive materials or from the activities of slime forming micro-organisms.

In replacing a biocide deposit control system it was seen that the micro-organism count rose significantly. Even though after several days running, the paper machine white water circuits showed a 100 times increase in the numbers of aerobic micro-organisms, there was no tendency to increased deposits of biological slime. In another trial where a lignosulphonate deposit control system known to be non-toxic was replaced by the process of this invention, the already quite high bacteria count in the circuit remained at approximately the same level.

Even when citrus fruit extracts were used as part of the solvent component of the product used in this invented process, it was found that no significant difference was measured in the counts of micro-organisms in the aqueous phase of the system being treated. According to what is taught in EP 0731 776, such solvents in the form of a true oil-in-water emulsion would have a significant reducing effect on measurable level of micro-organisms in the aqueous phase. This demonstrates an important difference in the invented process in that the form of the product added in the invented process is such that it is intended that as much as possible of the solvent component be deposited onto hydrophobic surfaces of the system being treated to reduce the ability of any substance to form deposits on those surfaces. The process is not intended to influence the material being transported by the aqueous phase or the aqueous phase itself but to influence the surfaces, especially the hydrophobic surfaces, that it comes in contact with.

Clearly, the danger that the use of toxic substances represent to any biological waste-water plant treating the paper machine waste water does not apply to this invented process, giving a significant environmental advantage over biocides. Furthermore, no potentially toxic residues as is possible from biocides can collect in the finished paper, an advantage which can be essential in food-packaging paper grades or paper that comes in contact with children.

Further, in the development of deposit control systems for paper machines, it is important to consider that such a system should have as little influence as possible on other systems needed to actually make paper. For instance, due to tendency of some necessary additives to create foam which is very detrimental to the papermaking process, special anti-foam additives must normally be used in the circuit. The products used in the process of this invention have been so formulated that although tensides are present, no significant worsening of foaming problems has been measured and in some trials it was even found that less conventional de-foamer was needed showing that even though the process uses small additions of certain tensides, the process imparts a de-foaming effect in some applications.

Thus the products used in this invention and the way the products are applied can be specifically tailored to the requirements of the situation.

To develop and optimise the invented process including comparison with existing deposit control processes, trials were run on paper machines of various types producing various grades of paper from different raw materials. It is clear that most paper production systems already run at high efficiency levels with respect to machine design or grade of difficulties involved. It was necessary that trials should run for considerable lengths of time to ultimately show that the invented process gave advantages over previous systems. For instance, even 2 years of trials can be needed to demonstrate that seasonal differences in deposit problems are taken into account. Microbial growth is higher in summer and levels of contamination from fresh water can be almost non-existent in deep winter. On the other hand, content of natural resins in pulp can vary enormously throughout year. Additionally, a producer, of for instance packaging board using waste paper, will buy waste from various sources over the time. The trials should be long enough to compensate for these variable factors.

In a paper machine where biocides were used for biological slime control but where problems with resinous deposits were still present, the process of this invention was applied in addition to the biocide in use. During the first 24 hours there were many more problems from resin deposits in the paper than normal but leading rapidly thereafter to a much improved runability. The temporary increase in spots demonstrated the cleaning power of the invented process against non-biological deposits in a paper machine essentially under circumstances of good biological slime control whereby eventually the combination of the invented process with a biocide system was more effective than the biocide system alone.

The same improvement was observed in a paper machine where relatively large quantities of oxidising biocide (bromo-chloro dimethyl hydantoin or BCDMH) was being used to treat all fresh water used in the papermaking process and where additional application of the invented process reduced problems of holes in the paper caused by deposits of natural resins from the pulp.

In another paper machine, clarified water derived from white-water II was held in a large sedimentation vessel to allow further solids to sediment out before using this water as process water once again. Due to the time the water stayed in this vessel there was a strong tendency for anaerobic bacteria to grow creating smells. A continual feed of an oxidising biocide, BCDMH solution fed from a "Brominator" tablet dissolving unit, was being added to this vessel to maintain a positive Redox condition and prevent the growth of anaerobic micro-organisms. The primary conventional biocide system being shock-dosed into the main white water circuits of the paper machine was replaced with a continual dosage of a product as in the invented process whereby after a time, less flecks and holes were observed in the paper being produced.

In yet another paper machine where a combination of organic solvent and tenside was being added to the white water circuit to combat problems from chemical deposits and white-pitch, a quantity of bromo-chloro dimethyl hydantoin (BCDMH) pre-dissolved in water was being added to the fresh water coming onto the paper machine. A quantity of this treated fresh water was being used in various showers which eventually went anyway into the white water circuits. However, some sprays were using clarified water (filtered white water II) and in these spray regions (thus not under water) there were still some unwanted slime deposits. A part of the BCDMH solution was re-routed to be introduced into the chest holding the clarified water. Thus the showers with clarified water were then being treated with a solution which contained active oxydizing chlorine or bromine or both as well as dimethyl hydantoin which is known to stabilize such halogens to reduce the tendency to unnecessarily oxidize organic substances but increase the ability of such halogens to kill or inhibit the growth of bacteria in systems containing organic matter.

The general deposit condition in those spray regions immediately improved leading to an overall improvement in the runability of the paper machine.

The mixture of hydrocarbon solvents with tensides as relating to the method of this invention can be dosed in appropriate quantities into an aqueous system and measuring the effects in the way described it has been possible to demonstrate that this method is able to successfully solve the problem as set out for this invention.

Addition levels of the solvent and tenside mixture to an aqueous system that transports solid substances such as a paper machine white water circuit can be in the range of 10 to 10000 ppm based on the dry weight of solids contained in the aqueous system, preferably 50 to 500 ppm, typically but more especially from 150 to 400 ppm. In an aqueous system with low levels of solids being transported, the product can be dosed at a typical level of 2 to 25 ppm, preferably 4 to 10 ppm, based on the water volume flowing through the system.

In the following the present invention is explained in more detail by the following not limiting examples.

### Examples

### Example 1: Preparation of a mixture of an organic solvent with tenside

A solution of a blend of surfactants in a solvent mixture was produced by simple mixing whereby the surfactants constituted 2.5 % w/w of the mixture. The components were mixed together for 30 minutes and the resulting product was stored at room temperature.

The solvent used was a de-aromatised white spirit originating as a hydrogen-treated petroleum distillate fraction naphtha with a boiling range average of 198°C.

### Additions by weight:

| | |
|---|---|
| De-aromatised white spirit | 97.5 % |
| isopropanolamine dodecylbenzenesulfonate | 0.8 % |
| Polyethyleneglycol monodecylether | 0.7 % |
| Di(2-ethylhexyl) sulfosuccinic acid, sodium salt | 0.6 % |
| C₁₂ - C₁₄ aliphatic alcohol ethoxylate | 0.4 % |

### Example 2: Preparation of a mixture of an organic solvent with tenside

A solution of a blend of surfactants in a solvent mixture was produced by simple mixing whereby the surfactants constituted 2,2 % w/w of the mixture. The components were mixed together for 30 minutes and the resulting product was stored at room temperature.

The main solvent used was a de-aromatised white spirit with a boiling range average of 198°C.

### Additions by weight:

| | |
|---|---|
| De-aromatised white spirit | 82.8 % |
| Orange terpene | 15.0 % |
| isopropanolamine dodecylbenzenesulfonate | 0.7 % |
| Polyethyleneglycol monodecylether | 0.6 % |
| Di(2-ethylhexyl) sulfosuccinic acid, sodium salt | 0.5 % |
| C₁₂ - C₁₄ aliphatic alcohol ethoxylate | 0.4 % |

### Example 4: Effect of mixing on addition of treatment product to water

500 ml of a mixture was made by adding 50 ml of a product as described in example 1 to a beaker and making up to 500 ml with tap water. A magnetic stirrer was placed in the beaker and the speed so adjusted so that no significant quantity of air was drawn in by vortex action. After 5 minutes, the mixing was turned off and the mixture allowed to stand. It was seen that after a few minutes the mixture separated out to degree with a cloudy upper layer representing approximately 10 % of the total volume. This indicated that the mixture with water was not a stable solution or emulsion and showed that only under continual mixing do the components remain relatively uniformly dispersed.

### Example 5: Preparation of a stabilised bromine chloride solution

A solution of stabilised bromine chloride was obtained which was prepared under industrial conditions by bringing together bromine and chlorine to form bromine chloride and adding this stream to a solution of sodium salt of sulphamic acid, where the pH of that solution was over 7 and maintained over 7 by addition of more sodium hydroxide, whilst cooling to remove the exothermically generated heat using a similar process to that described in US patent 6,068,861. The resultant product had a bromine chloride content of 11 % and a pH of 13.

The product so prepared had a mild odour, free of any intense halogen odour and was in the form of a low viscosity pale yellow liquid.

### Example 6: Preparation of a solution of stabilised bromine and chlorine in the form of bromo-chloro dimethyl hydantoin (BCDMH)

A device called a brominator was used. This consists of a 400 litre volume plastic pressure vessel with a water inlet going to a water distribution "spider" pipe in the lower part of the brominator inside. In to this vessel was put about 300 kg of a tablet form of BCDMH. The vessel was firmly closed whereby the outlet pipe from the upper part of the vessel fed to a flow meter. The maximum solubility of BCDMH in water at room temperature is approximately 0.2 %. The water flow through the brominator was so adjusted so that a halogen level in the water of approximately 900 ppm expressed as chlorine could be measured. A so called DPD chlorine tester was used to make the measurements.

### Example 7: Preparation of a solution of stabilised bromine and chlorine in the form of a mixture of bromo-chloro dimethyl hydantoin (BCDMH), dichloro dimethyl hydantoin and dichloro methyl ethyl hydantoin.

The same procedure as in example 6 was used whereby a product available commercially in tablet form known as DANTOBROM PG (registered trademark) was used. The resulting concentration expressed as chlorine was approximately 1800 ppm.

### Example 8: Preparation of a concentrated solution of stabilised chlorine in the form of a mixture of monochloro dimethyl hydantoin and dichloro dimethyl hydantoin

An alkaline 15% solution containing 15% of dimethyl hydantoin (as stabilizer) was mixed continually on-line with a solution of sodium hypochlorite that contained the equivalent of 13% active chlorine. The reaction produced no significant change in temperature and the product formed was a clear, very slightly yellow liquid. This liquid was tested to have a total combined but potentially active chlorine content of approximately 6 % whereby as a dilute solution in fresh water exhibited almost no free chlorine showing a high level of stabilization. The concentrated solution thus formed was used as a stabilised halogen biocide.

### Example 14: Prevention of deposits on guide-rolls of a chemical pulp de-watering machine

In a mill producing H₂O₂-bleach cellulose pulp, the guide rolls and the wire of the de-watering machine were prone to severe deposits of natural resins from the pulp. One particular guide roll supporting the de-watering wire was badly affected. It was often necessary to clean this roll by hand once per hour using a petroleum solvent.

The product as described in example 2 was added continually to the pulp stream coming onto the de-watering machine at a rate of 10 ppm based on the volume of pulp flowing onto the de-watering machine.

The de-watering machine could be run without manual cleaning of the guide rolls for up to 2 days continually, thus saving considerable down-time for cleaning.

### Example 15: Reduction of deposits on the former of a board machine

A multi-cylinder board machine making packaging board from 100% waste paper and board suffered continual problems from deposits especially on the first forming cylinder.

The product as described in example 1 was added continually to the thin-stock coming onto the formers of the board machine. After the first day of treatment, it was seen that all metal surfaces in contact with the treated stock and white-water were clean, meaning that also existing deposits had been cleaned away. This was especially so for the covering wire of the first former which was the main point where problems from deposits were previously apparent.

It was also seen that hydrophilic surfaces in contact with the stock or white water, such as concrete, did not show any significant improvement in the deposit situation.

No significant changes were measurable in the characteristics of the finished board in comparison to board produced without the addition of the deposit control product.

### Example 16: Reduction of deposits in the circuit of a fine paper machine using coated broke as part raw material with respect to effect on sizing

A small Fourdrinier paper machine making office and copy paper suffered particularly with white-pitch deposits on many surfaces that came in contact with paper stock or white water, especially in the head-box inner surfaces and on the holey-rolls. It was normal to stop production at least once every two days to clean these deposits away. The machine was supplied with stock which contained up to 50% coated broke from other coating machines in the same works plus fresh liquid pulp from the integrated chemical pulp mill.

The sizing with AKD on the machine was critical as due to the pulp mix and other additives used, it was difficult to hold the degree of sizing in specification. The product as in example 1 was dosed into the paper machine at a rate of 400 ppm based on dry paper being produced. Two dosing points were tried in trials. One in the stock before the sizing agent addition and in a later trial one in a point after the sizing agent addition to see if any negative influence on the sizing occurred.

The problems from white pitch deposits were significantly reduced in that it was possible to run for up to one week without stopping and cleaning to remove white pitch deposits from inside the head-box and on the holey-rolls.

No significant changes in the required Cobb of the finished paper or to the slipping (frictional) characteristics that were important to the function of the paper in photo copiers were measurable, whether the product was added to the circuit before the sizing agent or after.

### Example 17: Reduction of problems in a special paper machine caused by pitch by replacing a biocide-dispersant deposit control system

A paper machine making light weight, wood-free speciality paper was suffering badly from deposits caused by use of resin size. A deposit control system was in use consisting of 400 ppm dispersant and 370 ppm biocide based on dry paper weight. A further deposit problem always found on this machine at that time was deposits of spun-fibres building up on the holey-rolls in the head-box. On breaking free, these deposits produced holes and breaks.

The two components of the existing deposit control system were replaced by a single, continual addition of the product as described in example 2 to the water supplying the head-box anti-foam shower at a point directly by the head-box.

The consequence of the change of deposit control process was that the head-box, especially the lip, was found to be almost clean at each planned shut-down. Secondly, the running period between planned cleaning shut-downs could be extended and also the spun-fibre deposits on the holey-rolls all but disappeared giving a much longer running period before cleaning was necessary.

### Example 18: Reduction of breaks, elimination of biocide and cost reduction in an offset paper machine by replacing a biocide/bio-dispersant/pitch-dispersant deposit control system

A fine paper machine was producing office-quality offset printing paper and copy paper at a rate of approximately 380 tons per day. The white water circuits were being treated with biocides with the aim of reducing deposits caused by biological slime. The biocides were being dosed into white water I, white water II and to the machine chest.

A bio-dispersant was also being added to the white water II circuit.

Furthermore, a pitch dispersant product was added to the machine chest aimed at reducing deposits caused by natural resins from the chemical pulp.

Up to this point, the paper machine was stopped on average every 2 week for planned cleaning but also suffered unplanned stops every 5 to 10 days to clean the head-box as deposit growth progressively reduced runability through increased breaks and holes in paper.

It was wished to extend the running period of the production, to reduce or eliminate the biocides used for environmental reasons and to allow sales of the thus biocide-free treated paper to new markets and thirdly to reduce the complexity and cost of the deposit control systems used.

A trial was started where the biocides and bio-dispersant being added to the white water circuits of this paper machine were eliminated and a product as in example 2 was added continuously into the profile-regulation dilution water before the cross-flow distributor and to a second dosing point in the water directly feeding the anti-foam shower in the pulsation damper for the stock flow before the stock cross-flow distributor.

The addition levels were 65 ml/minute of product to both dosing locations meaning approximately 400 grams of the products of this invention per dry ton of paper produced.

The addition of pitch dispersant previously added to treat deposits caused by resins was left unchanged at 200 litres per day meaning approximately somewhat over 500 grams of pitch dispersant per ton (g/t) of dry paper.

During the course of the first 8 months running with this deposit control configuration the running period between cleaning stops was increased from 2 weeks to 4 weeks.

After a total of 9 months running with this deposit control configuration, the pitch dispersant was reduced to 100 litres/day or approximately 250 g/t on dry paper produced. After a further 12 months running with the modified deposit control configuration, the pitch control dispersant was eliminated completely.

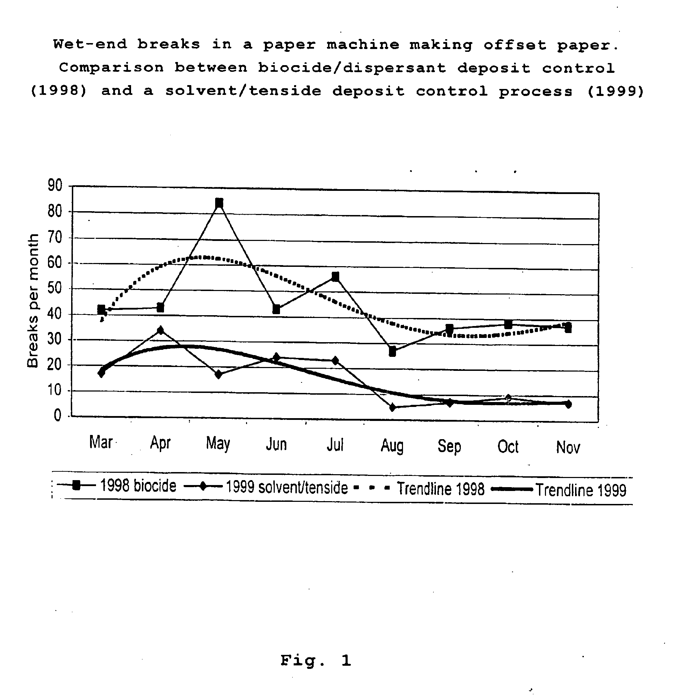

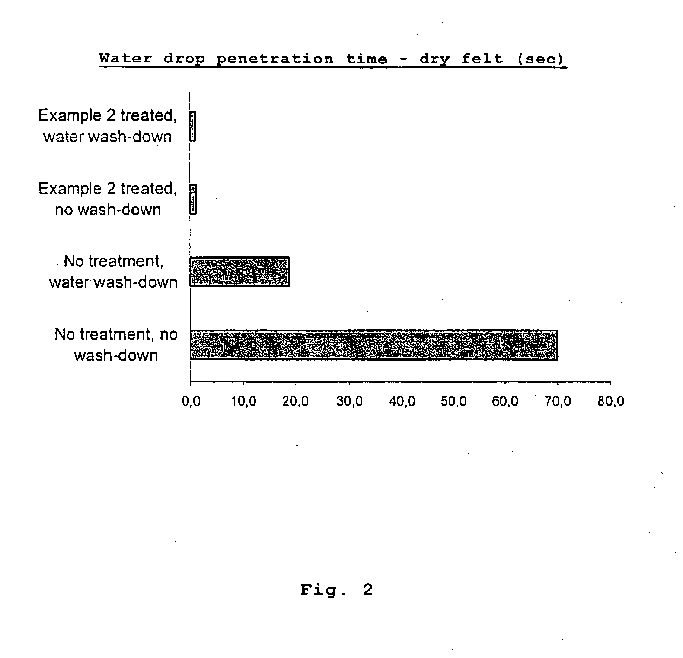

At this stage in the optimisation, the dosing configuration for the paper machine deposit control was as follows:
Product as in example 1: 110 g/t (ppm) based on dry paper production dosed continually into white-water II chest entry pipe-work. Aim was to keep this system and including clear-filtrate pipe-work deposit free.
Product as in example 1: 130 g/t (ppm) based on dry paper production dosed continually into machine chest. Aim here was to prevent deposits from natural pitch from the chemical pulp forming deposits on the chest walls and exit pipe-work.
Product as in example 2: 110 g/t (ppm) based on dry paper production dosed continually into the pipe-work leading to the profile regulation water cross-flow distributor. Aim here was to keep the cross-flow distributor for the profile water free of deposits.
Product as in example 2: 110 g/t (ppm) based on dry paper production dosed continually into the pulsation damper shower - meaning indirectly into the stock cross-flow distributor. Aim here was to keep the stock cross-flow distributor and head-box free of deposits.
Total additions: 460 ppm on dry paper.
No biocide addition to the circuits (elimination of 40 kg/d biocide or 105 ppm on dry paper).
Originally added bio-dispersant no longer added (elimination of approx. 50 kg/d or approx. 130 ppm based on dry paper).
No additional of originally added pitch dispersant (elimination of 200 1/d additive or approx. 530 ppm on dry paper).
Total eliminations: 765 ppm on dry paper (approximately)
The performance benefits obtained in terms of reduction of breaks per month is shown in Fig. 1.

### Example 19: Reduction of deposit problems in a special-paper machine making wet-strength paper by addition of a solvent in combination with a tenside to control deposits

A paper machine was producing label paper using wood-free pulp. Various paper grades were being produced in both acid and neutral/lightly alkaline conditions. The process pH changes were to allow certain wet-strength resins to be used depending on the paper grade.

The deposit control system was based on a continual addition of an alkaline solution of a low molecular weight lignosulphonate product. This system was said to be based on creating a biological equilibrium allowing non-slime-forming micro-organisms to predominate over slime-formers.

The papermaking process still suffered from deposit problems although from a variety of reasons thought to be due to the complex and ever-changing papermaking chemistry especially the wet-strength additives. The main problem was severe chemical deposits on the formation wire resulting is frequent cleaning stops. Increases in the addition of the product used in the existing deposit control system to high levels did not improve the deposit situation on the wire.

In a first trial, the continual addition of about 160 ppm of the lignosulphonate product to the white-water I circuit was kept as before but was supplemented by a continual addition of 240 ppm of a product essentially the same as in example 2 to the white water I circuit plus a second continuous addition of 240 ppm of the same product to the profile dilution water early in the pipe-work leading to the cross-flow manifold.

It was immediately seen that the formation wire remained much cleaner allowing a doubling of the running time before cleaning became necessary.

After more than 2 months running with this deposit control configuration, the lignosulphonate product addition was eliminated. The addition rate of the product of the type as in example 2 was left unchanged.

No worsening of the deposit situation on the wire was observed. In other words, it remained satisfactory. Measurements of counts of aerobic micro-organisms did not change significantly after the removal of the lignosulphonate product and remained at in the order of 10⁶ cfu/ml.

A trial was then started using a new type of wet-strength resin that meant that the paper machine had to be run under neutral conditions. During an earlier trial where only the lignosulphonate deposit control was used, it was not possible to run for long before the wire was so dirty that production was stopped. This time, with no lignosulphonate product in the system and only the addition of the product of the type as in example 2 in the WW I and in the dilution water dosed at 240 ppm to both locations, there was no significant build up of deposits and the paper machine could run continually with the neutral running conditions and the special wet-strength resin.

### Example 20: Reduction of deposits and prevention of anaerobic smell-causing conditions in a paper machine circuits by use of a solvent/tenside mixture in combination with an oxidizing biocide.

A fine-paper grade was being produced on a paper machine where residual solids in the filtrate water from the white water II fibre recovery unit were allowed to settle out in a large volume, conical sedimentation vessel. The flow through this vessel which had a volume of 400 m³/min was approximately 1.5 m³/min. Due to the activity of micro-organisms, there was a tendency for the conditions in this sedimentation funnel to go anaerobic resulting in production of low molecular weight fatty acids from the metabolism of anaerobic bacteria. Furthermore, H₂S was also sometimes measurable contributing to smell and corrosion.

The white water I circuit was being treated with a biocide of the type 2,2-Dibromo-3-nitrilopropionamid (DBNPA). Further, a dispersant product was being added to the white water I circuit as part of the deposit control concept.

Another dose of DBNPA biocide was being added to the filtrate after the fibre-recovery before entry into the sedimentation vessel.

It was known that without the DBNPA biocide addition before the sedimentation the water in the sedimentation vessel would become anaerobic and smell-producing substances would begin to form resulting in smell in the finished paper.

The DBNPA addition to the filtrate water was later replaced by an oxidizing biocide, bromo chloro dimethyl hydantoin (BCDMH) added in dissolved form, prepared in a similar way to that in example 6, to the filtrate before the sedimentation vessel. Without the BCDMH oxidizing biocide was intended to eliminate the need for DBNPA whilst contributing an oxidising product to combat anaerobic conditions.

In a trial, the white water I biocide and the dispersant were eliminated and replaced by a single continuous addition of a product essentially the same as that in example 2.

With this combination of products added in this way the paper machine was able to run for 20 days before a cleaning stop was necessary. With the previous process, on average 10 days was possible.

Thus use of the non-oxidizing biocide was eliminated from the white water I circuit and the running period was extended.

### Example 21: Reduction of deposit problems in a special-paper machine making wet-strength paper by addition of a solvent in combination with a tenside and biocides to control deposits

A paper machine used shock doses of biocides for biological slime control but still had problems with resinous deposits in the white water circuits and on the formation wire. Two types of biocide were being shock dosed alternately, the first type, a quaternary ammonium salt - didecyl dimethyl ammonium chloride, the second with bromo nitro propandiol as active ingredient. A product based on a solution of a tenside mixture in a hydrophobic solvent as in example 1 was added continually at 300 ppm (based on dry paper) to the white water I circuit in addition to the existing biocide dose. During the first 24 hours there were many more problems from resin deposits in the paper than normal but leading rapidly thereafter to a much improved runability. The temporary increase in spots demonstrated the cleaning power of the invented process against non-biological deposits in a paper machine essentially under circumstances of good biological slime control. The combination of a process where a solvent/tenside product was continually dosed into the white water in addition to a shock dose of biocide was more effective than the biocide treatment alone.

### Example 22: Prevention of biological deposits in a wood-fret fine paper machine by addition of a solution of stabilised bromine chloride

The stabilised bromine chloride product used was produced as in example 5 (APIBROM L).

A fine paper machine was producing special paper at a rate of approximately 80 tons per day. The white water circuits were already being treated by continual addition of a product consisting of a combination of a hydrophobic solvent and a tenside into the white water I circuit. A solution of bromo-chloro-dimethyl hydantoin (BCDMH) was being added into the head-box anti-foam shower water directly before the head-box. Experience had shown that without the treatment of BCDMH in this location, there was a tendency for slime to build up under the water surface on the walls of the head-box. Even with the combination of product from example 2 in the white water and the BCDMH dosage in the head-box, the head-box had to be cleaned at least every 10 days or deposits would start to show as spots in paper.

The use of BCDMH was achieved by filling a dissolving unit known as a "Brominator" every few days with tablets of BCDMH using a procedure as in example 6. This operation necessitated the use of gloves, breathing filters etc. during refilling.

During a period where the stabilised bromine chloride was added to the head-box shower water instead of the BCDMH solution, the machine ran for 20 days with no spot problems until a mechanical defect caused a necessary stop whereby, on opening the head-box, all surfaces under the water level were completely clean.

The performance benefits obtained were as follows:
- Longer running period than normal before needing to stop for head-box cleaning.
- Easy and safe biocide handling as the liquid stabilised bromine chloride product was dosed from a drum using a diaphragm pump.

### Example 24: Reduction in water droplet penetration time of a treated paper machine press-felt

A paper machine making wood-free copy paper was due to have a press-felt replaced at a planned boil-out. The felt fitted for the 3^{rd} press nip had been in use for one month and due to severe contamination the so called moisture profile in the paper after the press was no longer acceptable.

The paper machine was stopped for the boil-out but the press-section was brought to creep speed. Approx. 20 litres of a product as in example 2 was added to a 50 litre drum and diluted with an equal quantity of water and mixed. This mixture was sprayed with an air-driven spray pump onto the paper-side of the 3^{rd} press felt over the first 2 metres or so of felt- width in from the side facing the control-room. During the spraying application the mixture was constantly agitated by hand. The drive-side of the felt remained untreated, the felt being approximately 5 metres wide. After the application of the treatment product, low pressure fresh water showers were turned on for 5 minutes to rinse the felt. The felt was cut out of the machine and strips across the width were taken for analysis.

From areas that were treated and untreated, portions of felt were removed and further cut in half. The treated and untreated pieces were separately soaked in warm water for 30 minutes and subsequently profusely washed under a low pressure spray for 5 minutes. The felt pieces were then dried at 70°C and tested for water droplet penetration time.

Another piece of the untreated area of the felt was similarly dried and also tested for water droplet penetration time.

### Results

| Felt sample | Cleaning treatment | Water washdown | Water droplet penetration time (sec) |
|---|---|---|---|
| 1) | none | none | 70 |
| 2) | none | yes | 19 |
| 3) | Example 2 product | None | 1.2 |
| 4) | Example 2 product | yes | 1.0 |

The water penetration time of the untreated part of the felt after removal from the machine and drying at room temperature was very high. This showed a high level of hydrophobic character probably caused by hydrophobic organic contamination. After soaking in warm water and washing down with a water shower, the penetration time was still quite high showing that simply water washing was not enough.

The treatment with the product as in example 2 was able to reduce the water penetration time of the felt and thus increase the ability of the felt to absorb water quickly as necessary in a press.

The droplet penetration time for the treated felt which had been subsequently rinsed was also low even though any traces of surface active substances which may have been left in the felt from the treatment had been washed out.

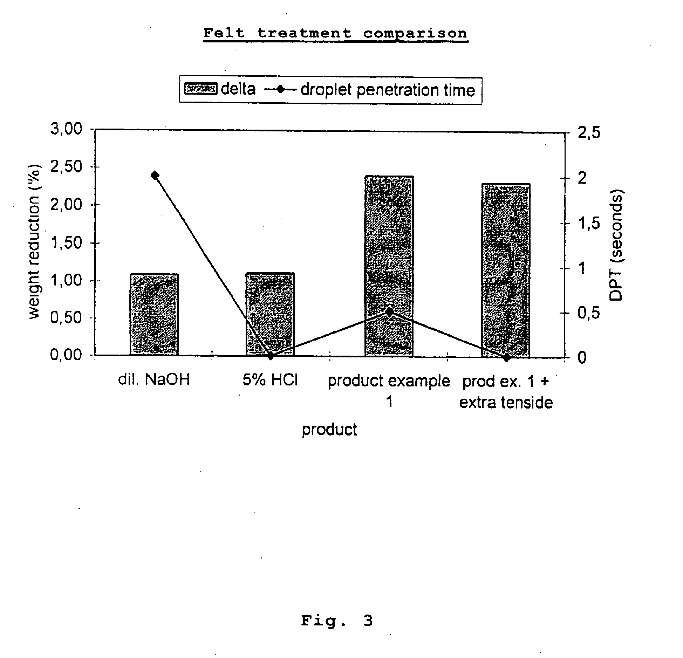

The results are graphically displayed in Fig. 3

### Example 25: Reduction in weight and water droplet penetration time of a treated paper machine press-felt

100 ml of a mixture was made by adding 50 ml of a product as described in example 1 to a beaker and making up to 100 ml with tap water. A second treatment mixture was made up with 50 ml water, 40 ml of a product as in example 1 and 10 ml of a tenside mixture as used in the formulation of the product from example 1. Further, two more solutions were made, one consisting of 5% hydrochloric acid and the other dilute sodium hydroxide. A magnetic stirrer was placed in each beaker.

Pieces of felt were cut from a press felt removed from the press-section of a board machine. The felt had been in use for approximately 3 weeks. These pieces of felt were conditioned in a drying oven then a dessicator before accurately weighing. The pieces of felt were suspended in the treatment mixtures for 20 minutes at 45°C. During this time the mixtures were stirred. After this time, the pieces of felt were removed and were rinsed under a room temperature low-pressure water shower from both sides for a total of 15 minutes to remove all possible thus removable traces of treatment products and contamination.

After this time, the felt pieces were dried to constant weight in a drying oven at 70°C, conditioned in a dessicator and re-weighed to determine the average weight loss.

A water droplet penetration test was now conducted on the pieces of felt, both untreated and treated. A drop of water was placed onto the surface of the felt using a dropping pipette and the time required for the droplet to penetrate fully into the felt was measured with a stop-watch.

The results are tabulated and graphically displayed in Fig. 3.

| Felt treatment: weight loss and water droplets penetration time | | | | | |
|---|---|---|---|---|---|
| no. | Treatment product | initial mass | end mass | delta | water drople penetration time |
| | | g | g | % | seconds |
| 1 | dil. NaOH | 0,921 | 0,909 | 1,087 | 2 |
| 2 | 5% HCl | 0,902 | 0,891 | 1,111 | 0 |
| 3 | product example 1 | 0,829 | 0,808 | 2,410 | 0,5 |
| 4 | prod ex. 1 + extra tenside | 0,860 | 0,838 | 2,326 | 0 |

The results show that the felt that had been used in the board machine for 3 weeks had removable contamination present representing approximately 2.5 % of the weight of the felt. Secondly, the treatment product as in example 1 of this invention removed more contamination than either an acid or alkaline wash or in fact a similar product with much more tenside present relative to the solvent.

The results also show that the water penetration time was improved.

### Example 26: Continuous treatment of a press-felt on a paper machine using a hand application device to apply treatment

A paper machine was making white paper for printed packaging use at a rate of approximately 8 tons/hr at approximately 450 m/min speed. The sheet weight was approximately 120 gm². Due mainly to problems with natural resins from the cellulose, the press felts were quickly becoming blocked with deposits and the paper machine was being regularly stopped for chemical cleaning of the felts. As part of the chemical cleaning program, oscillating high pressure water needle-jets were used to drive out contamination from the felts. These jets were also used periodically during the normal production of paper. The use of such high pressure cleaners was known to shorten the life of the felts and incurred a certain cost factor for the electrically driven high pressure pumps.

The problems caused by the contamination of the felts were therefore loss of production due to stopping and progressively poorer de-watering profile over the width of the press together with the fact that the felts were being replaced before the end of the normal mechanical life-span because it was no longer possible to get them clean. Secondly, the high pressure cleaning required would have shortened the life of the felts if they stayed clean enough but anyway incurred energy costs. Lastly, when paper was leaving the press with an unnecessarily high moisture content, specific drying energy costs per ton of paper produced (steam demand in drying section) were consequently higher.

15 litres of a product as in example 1 was mixed with water up to a total volume of 150 litres in a drum. This mix was held under agitation with a stirrer to prevent separation of the components. Using a hand-sprayer, 70 litres of this mixture was applied to the 3^{rd} felt in the press over a 25 minute time span. The application was conducted by hand but in a manner where the full width of the felt was as uniformly as possible treated with the mixture. During all this time the paper machine was producing paper normally.

The moisture profile of the paper sheet after the first drying section (following the press-section but before the size-press) was being continually measure by a device which also reported the statistical variation (as 2 sigma) of the moisture content across the sheet. The average moisture content of the paper sheet at the end of the paper machine was also being automatically measured.

### Results

| Moisture profile (2 Sigma) of paper sheet before size-press | | | |
|---|---|---|---|
| | 2 sigma | maximum | minimum |
| Before treatment start | 1.45 | 1.73 | 1.29 |
| After 25 minutes treatment | 1.12 | 1.15 | 1.2 |

| Average moisture across finished paper sheet at winder | | |
|---|---|---|
| | Specification % | Measured % |
| Before treatment start | 4.00 | 4.09 |
| After 25 minutes treatment | 4.00 | 3.65 |

During the period before the trial and the trial itself the steam demand and all other production parameters such as speed, press system vacuum, press pressure etc. were held constant.

### Example 27: Continuous treatment of a press-felt on a paper machine using a special application shower to apply additives

A single spray-bar was fitted on the inside of the 3^{rd} press felt on the paper machine referred to in example 5. This spray-bar was fitted with flat spray pattern nozzles every 20 cm. The nozzles were of 0.5 litre per minute at 3 bar water pressure capacity. The spray-bar was placed at such a distance from the felt (approximately 20 cm) to give an overlap in the individual spray pattern of 60%. This gave a relatively uniform application of treatment mixture. The pump system supplying the spray-bar was producing a system pressure of approximately 3 bars. The total quantity of carrier water thus applied was 2.5 litres per minute per meter width of the felt.

A product as in example 1 was added directly into to the stream of water being fed to the application spray-bar at a rate of 5 ml per minute per meter width of felt using a simple diaphragm pump. The control of the system was so made that if the shower was stopped for any reason, the treatment additive pump would also stop so that no neat product could be fed to the shower and that no neat product could separate out or coagulate from the product-water mixture normally passing through the shower system.

The quantity of treatment product used in this trial was clearly much lower than represented in example 5.

The use of the high pressure needle-jet cleaning sprays during production was normally decided upon from de-watering performance data derived from moisture profile irregularities after the press, from steam demand, from potential maximum speed and from end moisture content in finished paper.

### Results

During the first 2 weeks of the trial, it was necessary to use high pressure cleaning of the treated felt only 6.5% of the time (during actual production). Previous to the trial, it was on average necessary to use the high pressure cleaning sprays about 50% of the time during production. Clearly energy was saved and potentially the lifespan of the felt could be increased. Fresh water used in the continuous high pressure cleaning system was also saved.

Steam demand was not changed.

When one nozzle in the application spray-bar became blocked, it was seen as an area of higher moisture content in the sheet after the press within 8 hours of the nozzle being blocked.

### Example 28: Continuous treatment of a press-felt on a paper machine using a special application shower to apply additives

A paper machine making mainly office paper (80 gm² copy paper) was being stopped every 6 weeks for planned chemical cleaning of the complete white water circuits and during this shut-down many mechanical repairs were also carried out. However, due to differences in the cleaning requirements and life-span of the 3 felts in the press-section, the machine was being periodically stopped for felt cleaning and replacement during the preferred 6 week planned stoppage cycle.

A treatment application spray-bar as in example 7 was installed on the inside of the 3^{rd} press felt on this paper machine. A product as in example 2 was applied continually to the felt at a rate of 3 ml/min per metre felt width as described in example 6. The treatment was begun directly after a planned shutdown and the fitting of a new felt.

After 45 days running at the next shutdown, the 3^{rd} felt was replaced. During the 45 day period of the trial it was not necessary to stop to clean or replace the treated felt whereby the other two felts were both cleaned several times and eventually replaced with the unavoidable production stoppage also incurred.

The results of the treatment of the 3^{rd} felt in this way were such that it was planned to treat the remaining 2 felts similarly to save unplanned shutdowns for felt cleaning.

### Example 29: Continuous treatment of press felts on a paper machine by adding chemicals to an existing high-pressure cleaning shower

A paper machine was making newsprint at a rate of approximately 21 tons/hr and at a speed of approximately 1380 m/min at the winder. The limiting factor for maximum speed and production was the available drying energy or steam capacity for the drying section. The press section was equipped with 3 felts. Each felt was equipped with an oscillating high pressure needle-jet cleaning system set on the inside (opposite side to that in contact with paper) of the felt and approximately 1 metre from the likewise mounted vacuum box which was designed to remove excess water. These high pressure sprays were normally used continually. In the normal course of events, directly after a felt change (which could be from every 7 days up to 30 days depending on the felt position), the high pressure sprays were not used for the first 24 hours, then set at 5 bar water pressure and subsequently over the period of the felts life in the press, the pressure was slowly increased up to a maximum of 20 bars to cope with the ever increasing contamination level of the felts. Additionally, the paper machine was being stopped for up to 3 hours every 3^{rd} day to chemically clean the felts. The chemical cleaning was carried out using both alkaline and acid cleaning products containing solvents and tensides with either alkali or acids as part of the formulations. Thus better de-watering performance in the press-section meant less water to be dried out of the paper sheet.

The consequence of contamination of the felts were:
- shorter felt life
- poorer de-watering in the press
- increased specific steam demand in the subsequent drying section which as steam always ran at a maximum meant that the machine had to run slower and therefore produced less paper
- progressively higher energy costs for high pressure cleaning
- loss of production due to felt cleaning stoppages
- incurred costs for cleaning chemicals.

The contamination of press felts in this paper machine was usually accepted to be caused by sticky substances from the recycling of waste paper as raw material.

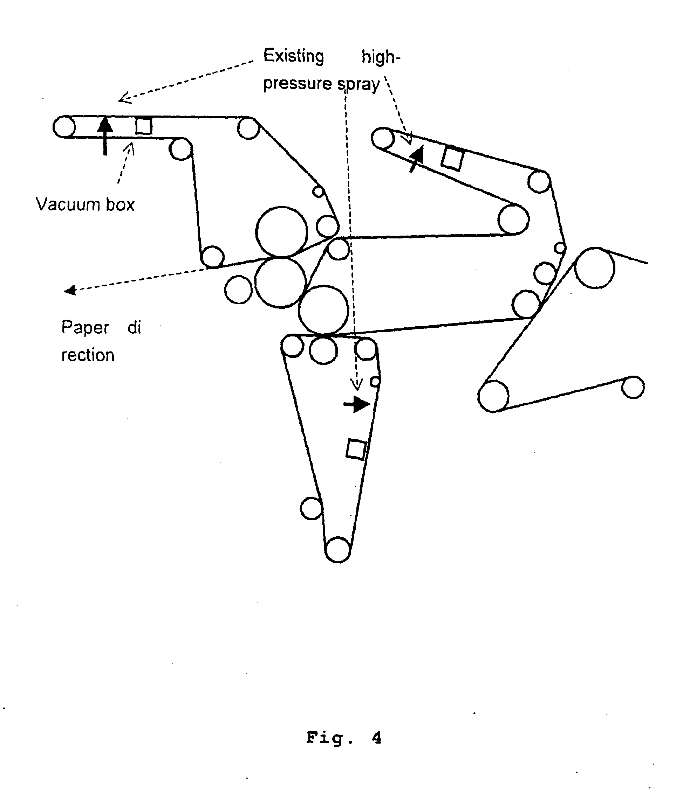

The location of the existing high pressure spray-bars and vacuum boxes is represented by the solid arrows in the diagram of Fig. 4.

A dosing system was installed to allow the addition of a treatment product into a point approximately 2 meters back in the high pressure water supply pipe-work from the high pressure spray bar. For the dosing metering, special piston-diaphragm pumps were installed. These pumps, with a potential delivery pressure of up to 65 bar if required, drew product directly from the supply/storage container for the treatment product and dosed through high pressure hose to the dosing point. Each of the three spray bars had an independent pump and dosing system.

At the beginning of the trial, the pick-up felt and the felt for the 3^{rd} press-nip were running in the press since 6 days after being replaced. The felt for the 1^{st} press-nip was running since 25 days in the press.

After this time, a product as in example 1 was added at a rate of 3 ml per minute per metre felt width to the water being fed both to the high pressure cleaning sprays for the felt for the 1^{st} press-nip and to the spray water for the felt for the 3^{rd} press-nip. 14 hours later, the same product was applied in the same way to the high pressure spray for the pick-up felt.

The available steam for drying was running at a relatively constant level during the trial as defined by the maximum steam input allowed by the design of the drying section and with respect to the necessary temperature profiles used. The water pressure in the high pressure cleaning sprays for the pick-up felt and the 3^{rd} press-nip felt was also kept constant at approximately 8 bars whereby the pressure for the 1^{st} press-nip felt was kept at 15 bars as the felt had been in use longer.

All through this time, various parameters were being automatically monitored by the paper machine measurement and control system. Such parameters included:
- Speed at the winder
- Steam demand for the drying section
- Vacuum for the suction boxes for the 3 press felts etc.

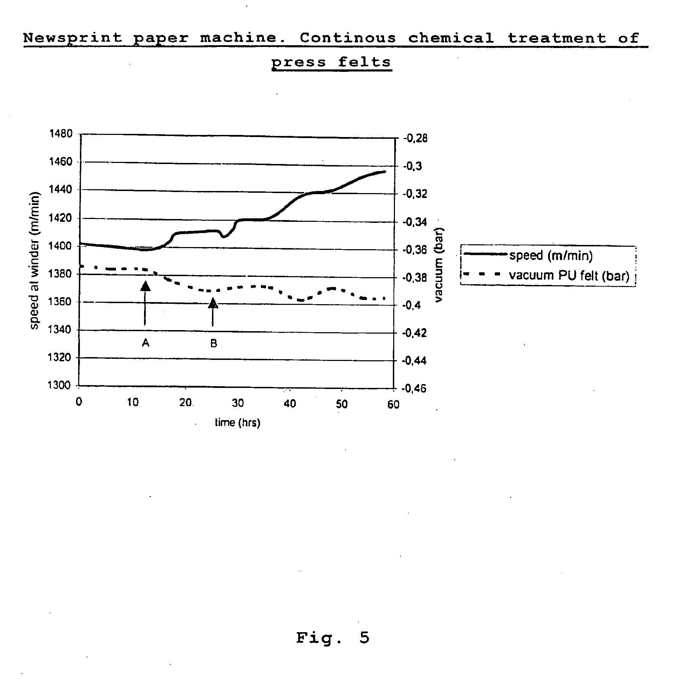

The development of speed and vacuum for the pick-up felt vacuum box is shown in the diagram of Fig. 5. Point A indicated where the treatment for the 1^{st} press-nip felt and the 3^{rd} press-nip felt was started. Point B indicated when the treatment of the pick-up felt was begun meaning all 3 felts were being treated.

### Results

Within 12 hours from the point where all three felts were being treated with 3 ml per minute per metre felt width of the product as in example 1, there was a noticeable increase in speed of production meaning also an increase in produced paper tonnage.

This increase went on progressively over a period of approximately 48 hours to achieve a stable speed of about 1480 m/min.

The progressive increase in vacuum in the suction box shown in the diagram is explained in that the felt is taking more water from the paper in the press and giving up more water to the suction box.

It was seen during a further 8 weeks running with this treatment that it was only necessary to stop and chemically wash the felts once per week instead of every 3 days thus saving production time and additional cleaning chemicals. Examples from drying fabric patent application

### Example 30: Fine paper machine - problem with latex deposits in the 3rd upper drying group of the drying section

This example refers to a paper machine that produces on-line coated paper. The coating consists of mineral pigments which are bound to the surface of the paper with a binder consisting mainly of latex. The recycling of broke consisting of coated paper back to the production process often causes deposits of sticky latex (so called "white pitch") on the drying fabrics. Sticky spots build up thicker and thicker over time on the drying fabric eventually producing unwanted depressions in the finished paper. The problem described here is seen in the 3^{rd} upper drying group.

A high-pressure cleaning device previously built in to this drying group did not bring any cleaning effect. To cope with this problem the paper machine has to be stopped and the affected drying fabric cleaned by hand using high pressure.

To solve the problem, a simple spray-bar fitted with flat spray profile nozzles over the width of the drying fabric was fitted above the paper side of the fabric. This spray-bar was fitted with very fine nozzles (160 ml/min at 2 bar) and was supplied with condensate. A filter (sieve width 80µ) was fitted in the condensate line before the spray-bar. A cleaning agent as in example 1 was added to the condensate supply before the filter using a small dosing pump. In this way, the drying fabric could be kept clean whereby the additional water used as the carrier for the cleaning agent did not have any influence on the drying profile or moisture content of the finished paper. An initially feared potential problem that the contamination would be simply carried over to the following drying group did not appear.

### Example 31: Paper machine for core paper - problems with sticky deposits on the 1st upper and lower drying group of the drying section

This paper machine produces core paper from 100% waste paper. The raw material has such a high level of contamination with sticky material that the drying wires in the 1^{st} drying group are fully blocked with contamination within a few days. Layers of sticky contamination build up partly in areas of several millimetres thick. The drying fabrics become so contaminated that they are neither permeable to water nor air. Through the resulting poor evaporation of water from the paper being dried, the speed of the paper machine must be slowed down resulting in a significant reduction in production.

The cleaning agent that had been continually added into the paper machine white water circuits and consequently with the wet paper came into the drying section, did not give any significant improvement with the deposit problems in the drying section.

To solve the problem, firstly a low pressure spray-bar fitted with flat spray pattern nozzles over the full width of the drying fabrics was installed over the paper side of the lower drying fabric in the 1st drying group. This spray bar was supplied with condensate. A filter (sieve width 80µ) was fitted in the condensate line before the spray bar. A cleaning agent as in example 1 was added to the condensate supply before the filter using a small dosing pump. Surprisingly, it was possible to keep the drying fabric clean without the small amount of additional water used as carrier in the spray bar affecting the end moisture content or moisture profile of the finished paper.

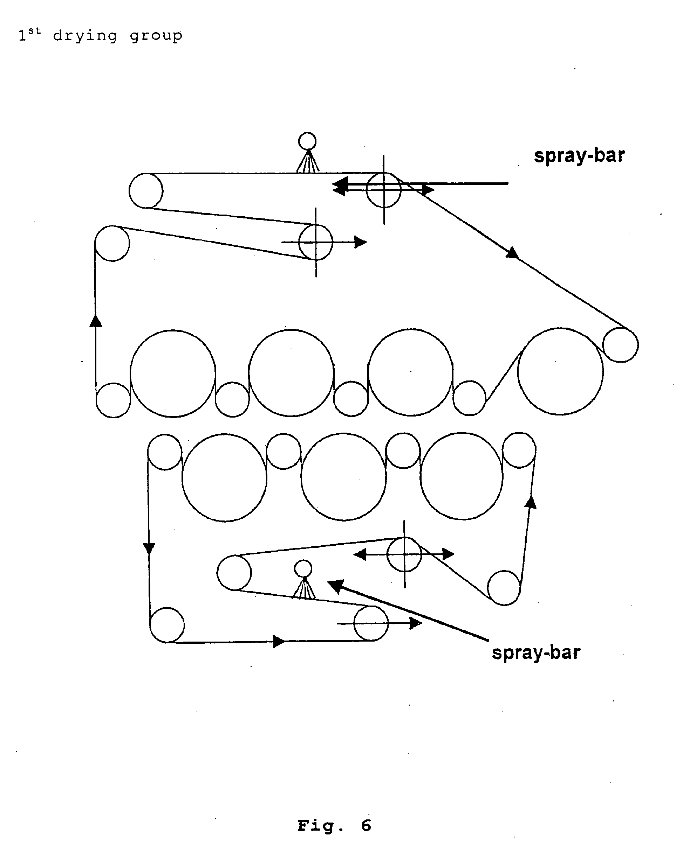

Location of treatment sprays on the core paper machine are shown in Fig. 6.

By the fact that some nozzles that became blocked in the early trials it became clear that contaminated stripes remained in both the treated 1st lower drying but also the following 2nd lower drying fabric and conversely, where the nozzles remained open ensuring application of the treatment chemical, both the treated area of the 1^{st} lower fabric and in fact the following 2^{nd} lower fabric part in the same line both kept clean. Thus it was clearly shown that the positive effect brought by the application of the cleaning and protection chemicals to the first fabric also had a positive effect on the following fabric.

### 2^{nd} lower drying fabric (not directly untreated)

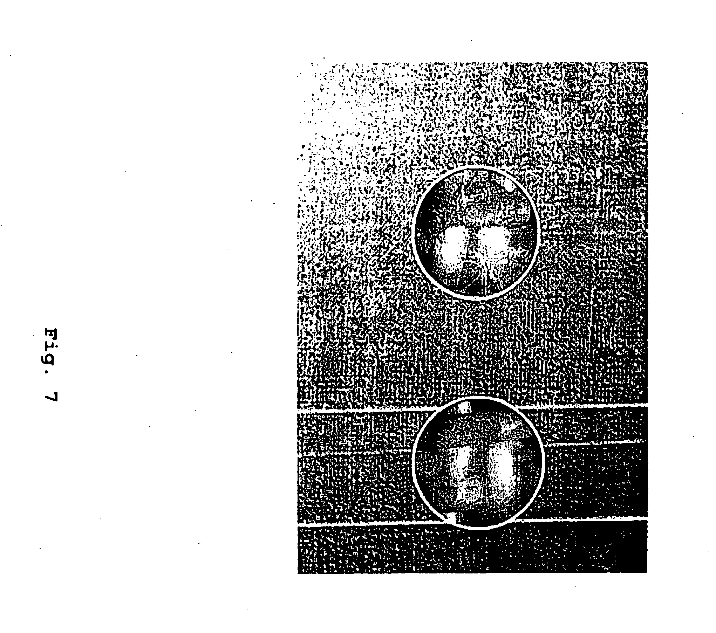

Area between line follows in line with a functional nozzle resulting in a cleaning effect carry-over. Area outside of lines shows dirty fabric (view inside circle is magnified 30 times) as shown in Fig. 7.

It was also shown with this treatment method that use of nozzles with false spray characteristics such as non-uniform coverage across the fabric width, could lead to wet stripes in the paper sheet. However with correct choice of nozzles this could be once again corrected.

## Claims

1. An additive comprising at least one hydrophobic organic solvent and at least one tenside,
**characterized in that**
the solvent is de-aromatised white spirit originating as a hydrogen-treated petroleum distillate fraction with a boiling range average of 198°C and having an aromatic hydrocarbon content of less than 0.1% and the at least one tenside is chosen from the group consisting of alkyl benzene sulfonate, alcohol amine salt, poly alkylene glycolalkyl ether, alkyl sulphonsuccinate alkali salt and/or aliphatic alcohol alkoxylate and constitutes 0.1 wt% to 10.0 wt% of the overall amount of organic solvent and tenside
for avoiding or at least reducing formation of deposits on surfaces in water bearing and/or contacting industrial systems.

2. The additive of claim 1, **characterized in that** it is further containing a stabilized halogen and/or bromine or bromine chloride stabilized in a solution of over-based metal salt of sulfamic acid in an amount of 5 to 80 wt.%.

3. The additive of claims 1 and 2, **characterized in that** up to 20 % of the combination of organic solvent and tenside is derived from and replaced by a terpene solvent.

4. The additive of claim 3, **characterized in that** the terpene solvent is orange terpene.

5. The additive of claims 1 to 4, **characterized in that** the organic solvent and tenside are in pre-mixed form containing essentially no water.

6. The additive of claim 2, **characterized in that** the stabilized halogen is selected from the group of halogens stabilized with an amine source and is more specifically selected from the group consisting of
- halogen derivatives derived from urea
- halogenated derivatives of isocyanuric acid, particularly dichloro- and trichloro isocyanuric acids or alkaline metal salts thereof
- halogenated succinimide
- halogenated methyl ethyl hydantoin
- halogenated p-toluene sulphonamide
- monochloro dimethyl hydantoin;
- dichloro dimethyl hydantoin;
- bromo-chloro-dimethyl hydantoin;
- dibromo-dimethyl hydantoin;
- a mixture of bromo-chloro-dimethyl hydantoin with dichloro-dimethyl hydantoin and dichloro-ethyl-methyl-hydantoin;
- any of the above group whereby a metal or ammoniacal bromid salt is directly or indirectly added;
- the product of reaction under alkaline conditions of a solution of an over-based metal hypochlorite with ammonium bromide.

7. The additive of claims 1 and 6, **characterized in that** it further comprises an oxidising or non-oxidising biocide.

8. A method for avoiding or at least reducing formation of deposits on surfaces in water bearing and/or contacting industrial systems,
**characterized by**
the addition of an additive according to claims 1 to 7 at selected sections of the system in an amount ranging from 10 to 10.000 ppm based on the dry weight of solids contained in the water volume of the system.

9. The method of claim 8, **characterized in that** the additive is applied directly or indirectly onto the pick-up felts, press felts, suction rolls or guide rolls in the press section of a paper or board machine.

10. The method of claim 8, **characterized in that** the additive is applied directly or indirectly onto the drying fabrics, guide rolls or drying cylinders of the drying section of a paper or board machine.

11. The method of claim 8, **characterized in that** the additive is directly or indirectly applied to a white water circuit of a paper or board machine.

12. The method of claim 8, **characterized in that** the additive is directly or indirectly applied to the circuits or parts of a pulp de-watering machine.

13. The method of claim 8, **characterized in that** the stabilized halogen is applied as a shock dose or continually added solution in an amount ranging from 10 to 10.000 ppm based on the dry weight of solids contained in the water volume of the system.

14. The method of claim 8, **characterized in that** it is applied directly or indirectly onto the de-watering wires or associated guide rolls of a sludge press.

## Patentansprüche

1. Additiv, umfassend wenigstens ein hydrophobes, organisches Lösungsmittel und wenigstens ein Tensid,
**dadurch gekennzeichnet, dass**
das Lösungsmittel entaromatisierter While Spirit ist, der als wässerstoffbehandelte Petroleumdestillatfraktion mit einem mittleren Siedebereich von 198°C und einem Gehalt an aromatischem Kohlenwasserstoff von weniger als 0,1% erscheint und das wenigstens eine Tensid aus der Gruppe ausgewählt ist, bestehend aus Alkylbenzolsulfonat, Alkoholaminsalz, Polyalkylenglykolalkylether, Alkalisalz von Akylsulfonbernsteinsäure und/oder aliphatischem Alkoholalkoxylat und 0,1 Gew.% bis 10 Gew.% der Gesamtmenge an organischem Lösungsmittel und Tensid bildet,
zur Vermeidung oder wenigstens Verminderung der Bildung der Ablagerungen auf Oberflächen in wasserführenden und/oder mit Wasser in Kontakt stehenden industriellen Anlagen.

2. Additiv nach Anspruch 1, **dadurch gekennzeichnet, dass** es des Weiteren ein stabilisiertes Halogen und/oder Brom oder Bromchlorid, stabilisiert in einer Lösung aus überbasischem Metallsalz von Sulfaminsäure, in einer Menge von 5 bis 80 Gew. % enthält.

3. Additiv nach Anspruch 1 und 2, **dadurch gekennzeichnet, dass** bis zu 20% % der Kombination aus organischem Lösungsmittel und Tensid von einem Terpen-Lösungsmittel abgeleitet oder **dadurch** ersetzt sind.

4. Additiv nach Anspruch 3, **dadurch gekennzeichnet, dass** das Terpen-Lösungsmittel Terpen orange ist.

5. Additiv nach den Ansprüchen 1 bis 4, **dadurch gekennzeichnet, dass** das organische Lösungsmittel und das Tensid in vorgemischter Form vorliegen und im Wesentlichen kein Wasser enthalten.

6. Additiv nach Anspruch 2, **dadurch gekennzeichnet, dass** das stabilisierte Halogen aus der Gruppe von Halogenen ausgewählt ist, welche mit einer Aminquelle stabilisiert sind und insbesondere aus der Gruppe ausgewählt ist, bestehend aus
- von Harnstoff abgeleiteten Halogenderivaten,
- halogenierten Derivaten von Isocyanursäure, insbesondere Dichlor- und Trichlorisocyanursäure oder Alkalimetallsalzen davon,
- halogeniertem Succinimid,
- halogeniertem Methylethylhydantoin,
- halogeniertem p-Toluolsulfonamid,
- dem Reaktionsprodukt einer Mischung aus Natriumhypochlorit mit Dimethylhydantoin,
- Monochlor-Dimethythydantoin,
- Dichlor-Dimethylhydantoin,
- Brom-Chlor-Dimethylhydantoin,
- Dibrom-Dimethylhydantoin,
- einer Mischung aus Brom-Chlor-Dimethylhydantoin mit Dichlor-Dimethythyldantoin und Dichlor-Ethylmethylhydantoin
- jeder der oben genannten Gruppen, wobei ein Metall- oder ammoniaklisches Bromsalz direkt oder indirekt zugegeben ist,
- dem Produkt der Reaktion unter alkalischen Bedingungen einer Lösung eines überbasischen Metallhypochlorits mit Ammoniumbromid.

7. Additiv nach den Ansprüchen 1 und 6, **dadurch gekennzeichnet, dass** es des Weiteren ein oxidierendes oder sichtoxidierende Biozid umfasst.

8. Verfahren zur Verminderung oder weinigstens Verminderung von Ablagerungen in wasserführenden und/oder mit Wasser in Kontakt stehenden Industrieanlagen, **gekennzeichnet durch** die Zugabe eines Additives gemäß den Ansprüchen 1 bis 7 an ausgewählten Abschnitten der Anlage und in einer Menge von 10 bis 10.000 ppm, basierend auf dem Trockengewicht der Feststoffe, welche in dem Wasservolumen der Anlage enthalten sind.

9. Verfahren nach Anspruch 8, **dadurch gekennzeichnet, dass** das Additiv direkt oder indirekt auf die Aufnahme-Filze, Press-Filze, Saugwalzen oder Leitwalzen in der Pressenpartie einer Papier-oder Pappemaschine aufgetragen wird.

10. Verfahren nach Anspruch 8, **dadurch gekennzeichnet, dass** das Additiv direkt oder indirekt auf die Trockensiebe, Leitwalzen oder Trockenzylinder der Trockenpartien einer Papier- oder Pappemaschine aufgetragen wird.

11. Verfahren nach Anspruch 8, **dadurch gekennzeichnet, dass** das Additiv direkt oder indirekt dem Siebwasserkreislauf einer Papier- oder Pappemaschine zugegeben wird.

12. Verfahren nach Anspruch 8, **dadurch gekennzeichnet, dass** das Additiv direkt oder indirekt den Kreisläufen oder Teilen einer Pulpe-Entwässerungsmaschine zugegeben wird.

13. Verfahren nach Anspruch 8, **dadurch gekennzeichnet, dass** das stabilisierende Halogen als Einmaldosis oder kontinuierlich zugegebene Lösung in einer Menge von 10 bis 10.000 ppm, basierend auf dem Trockengewicht von Feststoffen, welche in dem Wasservolumen der Anlage vorhanden sind, zugegeben wird.

14. Verfahren nach Anspruch 8, **dadurch gekennzeichnet, dass** es direkt oder indirekt auf die Entwägserungssiebe oder damit verbundene Leitwalzen einer Schlammpresse zugegeben wird.

## Revendications

1. Additif comprenant au moins un solvant organique hydrophobe et non aromatique et au moins un dérivé tensioactif
**caractérisé en ce que**
le solvant est du "white spirit " désaromatisé d'origine de distillat de pétrole traité à l'hydrogène et ayant un domaine d'ébullition de 198°C et une teneur d'hydrocarbure aromatique de moins de 0.1%
et le dérivé tensioactif est choisi dans le groupe consistant en sulfonate d'alkylbenzéne, sel d'amine alcoolisé, glycoalkyléther de poyalcylène, sel alcalin de sulfonsuccinate d'alkyle, et/ou d'alcoxylate d'alcool aliphatique constitue 0,1% en poids à 10,0% en poids de la quantité totale de solvant organique et dérivé tensioactif,
pour éviter ou au moins réduire les dépots dans les systèmes industriels portant et/ou au contact de l'eau.

2. Additif selon la revendication 1, **caractérisé en ce qu'**il comprend en outre 5 à 80% en poids d'un halogène stabilisé et/ou brome ou chlorure de brome stabilisé dans une solution de sel métallique superbasique d'acide sulfamique.

3. Additif selon les revendications 1 et 2, **caractérisé en ce que** jusqu'a 20% de la combinaison de solvant organique et de dérivé tensioactif sont dérivés et remplacés par un solvant terpène.

4. Additif selon la revendication 3, **caractérisé en ce que** le solvant terpène est le terpène orange.

5. Additif selon les revendications 1 à 4, **caractérisé en ce que** le solvant organique et le dérivé tensioactif sont sous forme prémélangée ne contenant essentiellement pas d'eau.

6. Additif selon la revendication 2, **caractérisé en ce que** l'halogène stabilisé est choisi dans le groupe d'halogènes stabilisés avec une source d'aminé et est plus spécifiquement choisi dans le groupe consistant en:
- dérivés d'halogènes dérivés d'urée
- dérivés halogènes d'acide isocyanurique, en particulier d'acides dichloro- et trichloroisocyanuriques ou de leurs sels métalliques alcalins
- succinimide halogéné
- méthyléthylhydantoïne halogénée
- sulfonamide de p-toluène halogène
- le produit de réaction d'un mélange d'hypochlorite de sodium avec de la diméthylhydantoïne
- monochlorodiméthylhydantoïne
- dichlorodiméthylhydantoïne
- bromo-chloro-diméthylhydantoïne
- dibromo-dimèthylhydantoïne
- un mélange de bromo-chloro-diméthylhydantoïne avec de la dichloro-diméthylhydantoïne et de la dichloro-éthyl-mèthyl-hydantoine
- n'importe lequel des groupes ci-dessus moyennant quoi un sel de bromure métallique ou ammoniacal est directement ou indirectement ajouté
- le produit de réaction dans des conditions alcalines d'une solution d'hypochlorite de métal superbasique avec du bromure d'ammonium.

7. Additif selon les revendications 1 à 6, **caractérisé en ce qu'**il comprend en outre un biocide oxydant ou non oxydant.

8. Procédé pour éviter ou au moins réduire les dépôts dans les systèmes industriels portant et/ou au contact de l'eau, **caractérisé par** l'addition d'un additif selon les revendications 1 à 7, et à des sections choisies du système dans une quantité allant de 10 à 10 000 ppm sur la base du poids à sec des solides contenus dans le volume d'eau du système.

9. Procédé selon la revendication 8, **caractérisé en ce que** l'additif est appliqué directement ou indirectement, sur les feutres pick-up, les feutres presse, les rouleaux aspirants ou les rouleaux de guide dans la section de presse d'une machine à papier ou à carton.

10. Procède selon la revendication 8, **caractérisé en ce que** l'additif est appliqué directement ou indirectement, sur les toiles de sécherie, les rouleaux de guide ou les cylindres sécheurs de la section de sécherie d'une machine à papier ou à carton.

11. Procédé selon la revendication 8, **caractérisé en ce que** l'additif est appliqué directement ou indirectement sur un circuit d'eau blanche d'une machine à papier ou à carton.

12. Procédé selon la revendication 8, **caractérisé en ce que** l'additif est appliqué directement ou indirectement aux circuits ou pièces d'une machine d'égouttage de pâte.

13. Procédé selon la revendication 8, **caractérisé en ce que** l'Halogène stabilisé est appliqué sous forme de dose unique ou de solutions ajoutée en continu, dans une quantité allant de 10 à 10 000 ppm sur la base du poids à sec des solides contenus dans le volume d'eau du système.

14. Procédé selon la revendication 8, **caractérisé en ce qu'**il est appliqué directement ou indirectement sur le toiles d'égouttage ou les rouleaux guide associés d'une presse à boule.
